(19) Europäisches Patentamt
European Patent Office
Office européen des brevets

(11) **EP 3 779 728 A1**

(12) **EUROPEAN PATENT APPLICATION**
published in accordance with Art. 153(4) EPC

(43) Date of publication:
**17.02.2021 Bulletin 2021/07**

(51) Int Cl.:
***G06F 16/35*** *(2019.01)*

(21) Application number: **19797043.7**

(22) Date of filing: **23.04.2019**

(86) International application number:
**PCT/JP2019/017193**

(87) International publication number:
**WO 2019/212006 (07.11.2019 Gazette 2019/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.05.2018 JP 2018088829**

(71) Applicant: **Fronteo, Inc.**
**Tokyo 108-0075 (JP)**

(72) Inventor: **TOYOSHIBA, Hiroyoshi**
**Tokyo 108-0075 (JP)**

(74) Representative: **Vossius & Partner**
**Patentanwälte Rechtsanwälte mbB**
**Siebertstrasse 3**
**81675 München (DE)**

(54) **PHENOMENON PREDICTION DEVICE, PREDICTION MODEL GENERATION DEVICE, AND PHENOMENON PREDICTION PROGRAM**

(57) Included are a learning data input unit 10 that inputs m texts as learning data, a similarity index value computation unit 100 that extracts n words from m texts and computes a similarity index value reflecting a relationship between the m texts and the n words, a classification model generation unit 14 that generates a classification model for classifying m texts into a plurality of phenomena based on a text index value group including n similarity index values for one text, and a phenomenon prediction unit 21 that predicts one of a plurality of phenomena from a text to be predicted by applying a similarity index value computed by the similarity index value computation unit 100 from a text input by a prediction data input unit 20 to a classification model, and a highly accurate classification model is generated using a similarity index value that represents which word contributes to which text and to what extent.

FIG. 1

EP 3 779 728 A1

**Description**

Technical Field

The present invention relates to a phenomenon prediction device, a prediction model generation device, and a phenomenon prediction program, and particularly relates to a technology for predicting a specific phenomenon based on content of a text including a plurality of words, and a technology for generating a prediction model used for this prediction.

Background Art

Conventionally, a technology for predicting a specific phenomenon using artificial intelligence (AI) has been widely used. Machine learning is one of AI. Machine learning is a technology that uses a computer to achieve a similar function to that of human learning, and is roughly divided into supervised learning, unsupervised learning, and reinforcement learning. In most widely used supervised learning, a plurality of pieces of teacher data having correct answers is prepared to generate a classification model by performing learning using the teacher data, and prediction target data is classified based on the generated classification model.

Data to be used as the teacher data is various. Among them, a system for performing machine learning using document data as the teacher data has been known for a long time (for example, see Patent Documents 1 and 2).

Patent Document 1 discloses a text data analysis apparatus capable of easily finding regularity matching intention of a user from text data. The text data analysis apparatus described in Patent Document 1 includes a text class storage unit that stores a class that classifies text, a concept definition dictionary storage unit that stores a set of words indicating an important concept in a target field as a concept definition dictionary, and a text analysis unit that analyzes the text. The text analysis unit generates a word string from the text by morphological analysis, extracts a feature of the text from the obtained word string, generates a case indicating the text feature and a class corresponding thereto, and performs inductive learning using the generated case, thereby generating a judgment rule and storing the judgment rule in a rule storage unit.

Patent Document 2 discloses a document classification apparatus that classifies documents by performing machine learning based on correct answer data. In the document classification apparatus described in Patent Document 2, a correct answer case which is a source for creating a new case is selected from correct answer data according to a machine learning method, a new correct answer case is created from the selected correct answer case based on a predetermined rule, and correct answer data for machine learning is created by adding the correct answer case to all or some of correct answer cases for machine learning.

Citation List

Patent Document

    Patent Document 1: JP-A-2002-149675
    Patent Document 2: JP-A-2004-287776

Summary of the Invention

Technical Problem

In the case of predicting a phenomenon by machine learning, in order to improve the accuracy of prediction, it is necessary to improve the accuracy of the classification model generated by learning. In this respect, in the document classification apparatus described in Patent Document 2, by creating a new case from an existing correct answer case for machine learning, it is possible to increase variation of cases and improve the accuracy of machine learning.

However, there is a limit to increasing the accuracy of the generated classification model simply by increasing the number of cases since not all newly created cases are suitable as teacher data. Further, even when the number of appropriate cases increases, it is not possible to expect to generate a highly accurate classification model unless an algorithm for generating the classification model is sufficiently improved.

For example, in the method of extracting the feature of the text based on the word string obtained from the text by the morphological analysis as in the above-mentioned Patent Document 1, the feature data is merely generated depending on what types of words are included in the text, and it is difficult to sufficiently improve the accuracy of the classification model generated based on such feature data. A reason is that while there is a possibility that the same word may be included in a plurality of texts, which word contributes to which text and to what extent, or which text contributes to which word and to what extent is not sufficiently evaluated as feature data.

The invention has been made to solve such a problem, and an object of the invention is to allow improvement in accuracy of prediction by increasing accuracy of a classification model generated by learning in the case of predicting a phenomenon by machine learning using a text including a plurality of words as a target.

Solution to Problem

To solve the above-mentioned problem, in a phenomenon prediction device of the invention, m texts are analyzed to extract n words from the m texts, each of the m texts is converted into a q-dimensional vector according to a predetermined rule, thereby computing m text vectors including q axis components, and each of the n words is converted into a q-dimensional vector according to a predetermined rule, thereby computing n word vectors including q axis components. Further, each of the inner products of the m text vectors and the n word vectors is taken to compute m × n similarity index values reflecting a relationship between the m texts and the n words. Then, a classification model for classifying m texts into a plurality of phenomena is generated based on a text index value group including n similarity index values per one text. At the time of predicting a phenomenon from a text to be predicted, one or more texts are input as prediction data, and a similarity index value obtained by executing each process of word extraction, text vector computation, word vector computation, and index value computation on the input prediction data is applied to a classification model, thereby predicting one of a plurality of phenomena from data to be predicted.

Advantageous Effects of the Invention

According to the invention configured as described above, since an inner product of a text vector computed from a text and a word vector computed from a word included in the text is calculated to compute a similarity index value reflecting a relationship between the text and the word, it is possible to obtain which word contributes to which text and to what extent, or which text contributes to which word and to what extent as an inner product value. Further, since a classification model is generated using a similarity index value having such a characteristic, it is possible to appropriately classify a text into one of a plurality of phenomena, taking into account a level of contribution of m texts and n words. Therefore, according to the present embodiment, in the case of predicting a phenomenon by machine learning using a text as a target, it is possible to increase accuracy of a classification model generated by learning to improve accuracy of predicting a phenomenon from a text.

Brief Description of the Drawings

Fig. 1 is a block diagram illustrating a functional configuration example of a phenomenon prediction device according to an embodiment.
Fig. 2 is a flowchart illustrating an operation example of the phenomenon prediction device according to the embodiment.
Fig. 3 is a block diagram illustrating another functional configuration example of a phenomenon prediction device according to an embodiment.

Mode for Carrying Out the Invention

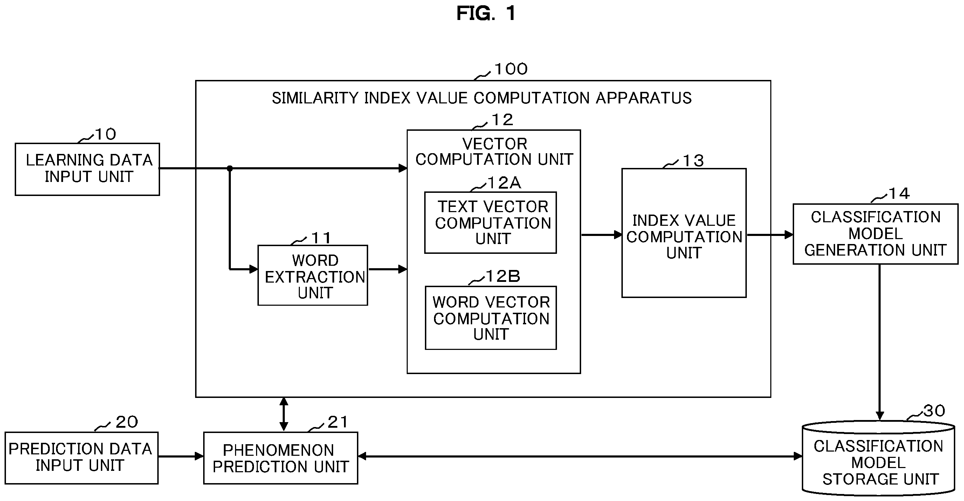

An embodiment of the invention will be described below with reference to the drawings. Fig. 1 is a block diagram illustrating a functional configuration example of a phenomenon prediction device according to the embodiment. As a functional configuration, the phenomenon prediction device of the present embodiment includes a learning data input unit 10, a word extraction unit 11, a vector computation unit 12, an index value computation unit 13, a classification model generation unit 14, a prediction data input unit 20, and a phenomenon prediction unit 21. The vector computation unit 12 includes a text vector computation unit 12A and a word vector computation unit 12B as a more specific functional configuration. Further, the phenomenon prediction device of the present embodiment includes a classification model storage unit 30 as a storage medium.

Note that for the sake of convenience of the following description, a part including the word extraction unit 11, the vector computation unit 12, and the index value computation unit 13 will be referred to as a similarity index value computation unit 100. The similarity index value computation unit 100 inputs text data related to a text, and computes and outputs a similarity index value that reflects a relationship between the text and a word contained therein. In addition, the phenomenon prediction device of the present embodiment predicts a specific phenomenon from content of a text (predicts a phenomenon to which the text corresponds among a plurality of phenomena) using the similarity index value computed by the similarity index value computation unit 100. Note that the prediction model generation device of the invention includes the learning data input unit 10, the similarity index value computation unit 100, and the classification model generation unit 14.

Each of the functional blocks 10 to 14 and 20 to 21 can be configured by any of hardware, a Digital Signal Processor (DSP), and software. For example, in the case of being configured by software, each of the functional blocks 10 to 14 and 20 to 21 actually includes a CPU, a RAM, a ROM, etc. of a computer, and is implemented by operation of a program stored in a recording medium such as a RAM, a ROM, a hard disk, or a semiconductor memory.

The learning data input unit 10 inputs text data related to m texts (m is an arbitrary integer of 2 or more) as learning data. Here, which one of a plurality of phenomena is a phenomenon to which each of the m texts corresponds is known. Here, the plurality of phenomena may be two phenomena or more than three phenomena. For example, it is possible to adopt two phenomena indicating presence or absence of a possibility of occurrence of one matter such as a possibility of occurrence of a specific failure or symptom. Alternatively, it is possible to adopt a combination of two or more phenomena having different properties such as personality types or hobbies of people. Note that the phenomena listed here are merely examples, and the invention is not limited thereto.

It is preferable that the text data to be input is data in which texts related to a plurality of phenomena desired to be predicted are described. For example, in the case of inputting learning data in order to construct a prediction model for predicting presence or absence of a possibility of system failure, text data related to a report describing a result of system monitoring or inspection is input.

However, in the case of the purpose of predicting a personality type, a hobby, etc. of a person, even when a text seems to be unrelated to a plurality of phenomena desired to be predicted, a relationship between the text and a phenomena may be found by analysis described below. Therefore, it is not indispensable to use only a text determined by a human to be related to the plurality of phenomena desired to be predicted as learning data. In other words, depending on the content of the plurality of phenomena desired to be predicted, not only data that describes a text clearly related to the plurality of phenomena, but also data that describes a text that seems to be unrelated to the plurality of phenomena are input as learning data.

In addition, a text input by the learning data input unit 10, that is, a text to be analyzed may include one sentence (unit divided by a period) or include a plurality of sentences. A text including a plurality of sentences may correspond to some or all of texts included in one document. In the case of using some texts included in one document as learning data, the learning data input unit 10 inputs text data in a state where a part of the document to be used as learning data is set (strictly speaking, document data is input, and a setting part in the document is used as text data) . For example, in a document having a plurality of description items, it is conceivable to set a text related to a specific description item to be used as learning data. The number of description items to be set may be one or plural.

The word extraction unit 11 analyzes m texts input by the learning data input unit 10, and extracts n words (n is an arbitrary integer of 2 or more) from the m texts. As a text analysis method, for example, a known morphological analysis can be used. Here, the word extraction unit 11 may extract morphemes of all parts of speech divided by morphological analysis as words, or may extract only morphemes of specific parts of speech as words.

Note that m texts may include a plurality of the same words. In this case, the word extraction unit 11 does not extract a plurality of the same words, and extracts only one word. That is, n words extracted by the word extraction unit 11 refer to n types of words. Here, the word extraction unit 11 may measure a frequency with which the same word is extracted from m texts, and extract n words (n types) in a descending order of the appearance frequency or n words (n types) whose appearance frequency is greater than or equal to a threshold value.

The vector computation unit 12 computes m text vectors and n word vectors from m texts and n words. Here, the text vector computation unit 12A converts each of the m texts targeted for analysis by the word extraction unit 11 into a q-dimensional vector according to a predetermined rule, thereby computing m text vectors including q (q is an arbitrary integer of 2 or more) axis components. In addition, the word vector computation unit 12B converts each of the n words extracted by the word extraction unit 11 into a q-dimensional vector according to a predetermined rule, thereby computing n word vectors including q axis components.

In the present embodiment, as an example, a text vector and a word vector are computed as follows. Now, a set $S = <d \in D, w \in W>$ including the m texts and the n words is considered. Here, a text vector $d_i\rightarrow$ and a word vector $w_j\rightarrow$ (hereinafter, the symbol "→" indicates a vector) are associated with each text di (i = 1, 2, ..., m) and each word $w_j$ (j = 1, 2, ..., n), respectively. Then, a probability $P(w_j|d_i)$ shown in the following Equation (1) is calculated with respect to an arbitrary word $w_j$ and an arbitrary text di.

[Equation 1]

$$P(w_j \mid d_i) = \frac{\exp(\vec{w_j} \cdot \vec{d_i})}{\sum_{k=1}^{n} \exp(\vec{w_k} \cdot \vec{d_i})} \quad \cdots (1)$$

Note that the probability $P(w_j|d_i)$ is a value that can be computed in accordance with a probability p disclosed in, for example, a follow thesis describing evaluation of a text or a document by a paragraph vector. "'Distributed Representations of Sentences and Documents' by Quoc Le and Tomas Mikolov, Google Inc; Proceedings of the 31st International Conference on Machine Learning Held in Bejing, China on 22-24 June 2014" This thesis states that, for example, when there are three words "the", "cat", and "sat", "on" is predicted as a fourth word, and a computation formula of the prediction probability p is described. The probability p(wt|wt - k, ..., wt + k) described in the thesis is a correct answer probability when another word wt is predicted from a plurality of words wt - k, ..., wt + k.

Meanwhile, the probability $P(w_j|d_i)$ shown in Equation (1) used in the present embodiment represents a correct answer probability that one word $w_j$ of n words is predicted from one text $d_i$ of m texts. Predicting one word $w_j$ from one text di means that, specifically, when a certain text di appears, a possibility of including the word $w_j$ in the text di is predicted.

In Equation (1), an exponential function value is used, where e is the base and the inner product of the word vector w→ and the text vector d→ is the exponent. Then, a ratio of an exponential function value calculated from a combination of a text di and a word $w_j$ to be predicted to the sum of n exponential function values calculated from each combination of the text di and n words $w_k$ (k = 1, 2, ..., n) is calculated as a correct answer probability that one word $w_j$ is expected from one text di.

Here, the inner product value of the word vector $w_j$→ and the text vector $d_i$→ can be regarded as a scalar value when the word vector $w_j$→ is projected in a direction of the text vector $d_i$→, that is, a component value in the direction of the text vector $d_i$→ included in the word vector $w_j$→, which can be considered to represent a degree at which the word $w_j$ contributes to the text di. Therefore, obtaining the ratio of the exponential function value calculated for one word $W_j$ to the sum of the exponential function values calculated for n words $w_k$ (k = 1, 2, ..., n) using the exponential function value calculated using the inner product corresponds to obtaining the correct answer probability that one word $w_j$ of n words is predicted from one text di.

Note that since Equation (1) is symmetrical with respect to di and $w_j$, a probability $P(d_i|w_j)$ that one text di of m texts is predicted from one word $w_j$ of n words may be calculated. Predicting one text di from one word $w_j$ means that, when a certain word $w_j$ appears, a possibility of including the word $w_j$ in the text di is predicted. In this case, an inner product value of the text vector $d_i$→ and the word vector $w_j$→ can be regarded as a scalar value when the text vector $d_i$→ is projected in a direction of the word vector $w_j$→, that is, a component value in the direction of the word vector $w_j$→ included in the text vector $d_i$→, which can be considered to represent a degree at which the text di contributes to the word $w_j$.

Note that here, a calculation example using the exponential function value using the inner product value of the word vector w→ and the text vector d→ as an exponent has been described. However, the exponential function value may not be used. Any calculation formula using the inner product value of the word vector w→ and the text vector d→ may be used. For example, the probability may be obtained from the ratio of the inner product values.

Next, the vector computation unit 12 computes the text vector $d_i$→ and the word vector $w_j$→ that maximize a value L of the sum of the probability $P(w_j|d_i)$ computed by Equation (1) for all the set S as shown in the following Equation (2). That is, the text vector computation unit 12A and the word vector computation unit 12B compute the probability $P(w_j|d_i)$ computed by Equation (1) for all combinations of the m texts and the n words, and compute the text vector $d_i$→ and the word vector $w_j$→ that maximize a target variable L using the sum thereof as the target variable L.

[Equation 2]

$$L = \sum_{d \in D} \sum_{w \in W} \#(w, d)\, p(w \mid d) \quad \cdots (2)$$

Maximizing the total value L of the probability $P(w_j|d_i)$ computed for all the combinations of the m texts and the n words corresponds to maximizing the correct answer probability that a certain word $w_j$ (j = 1, 2, ..., n) is predicted from a certain text di (i = 1, 2, ..., m). That is, the vector computation unit 12 can be considered to compute the text vector $d_i$→ and the word vector $w_j$→ that maximize the correct answer probability.

Here, in the present embodiment, as described above, the vector computation unit 12 converts each of the m texts di into a q-dimensional vector to compute the m texts vectors $d_i$→ including the q axis components, and converts each of the n words into a q-dimensional vector to compute the n word vectors $w_j$→ including the q axis components, which corresponds to computing the text vector $d_i$→ and the word vector $w_j$→ that maximize the target variable L by making q axis directions variable.

The index value computation unit 13 takes each of the inner products of the m text vectors $d_i$→ and the n word

vectors $w_j\rightarrow$ computed by the vector computation unit 12, thereby computing $m \times n$ similarity index values reflecting the relationship between the m texts di and the n words $w_j$. In the present embodiment, as shown in the following Equation (3), the index value computation unit 13 obtains the product of a text matrix D having the respective q axis components ($d_{11}$ to $d_{mq}$) of the m text vectors $d_i\rightarrow$ as respective elements and a word matrix W having the respective q axis components ($w_{11}$ to $w_{nq}$) of the n word vectors $w_j\rightarrow$ as respective elements, thereby computing an index value matrix DW having $m \times n$ similarity index values as elements. Here, $W^t$ is the transposed matrix of the word matrix.

[Equation 3]

$$
D = \begin{pmatrix} d_{11} & d_{12} & \cdots & d_{1q} \\ d_{21} & d_{22} & \cdots & d_{2q} \\ \vdots & \vdots & \ddots & \vdots \\ d_{m1} & d_{m2} & \cdots & d_{mq} \end{pmatrix} \qquad W = \begin{pmatrix} w_{11} & w_{12} & \cdots & w_{1q} \\ w_{21} & w_{22} & \cdots & w_{2q} \\ \vdots & \vdots & \ddots & \vdots \\ w_{n1} & w_{m2} & \cdots & w_{mq} \end{pmatrix}
$$

$$
DW = D * W^t = \begin{pmatrix} dw_{11} & dw_{12} & \cdots & dw_{1n} \\ dw_{21} & dw_{22} & \cdots & dw_{2n} \\ \vdots & \vdots & \ddots & \vdots \\ dw_{m1} & dw_{m2} & \cdots & dw_{mn} \end{pmatrix} \qquad \cdots (3)
$$

Each element of the index value matrix DW computed in this manner may indicate which word contributes to which text and to what extent. For example, an element $dw_{12}$ in the first row and the second column is a value indicating a degree at which the word $w_2$ contributes to a text di. In this way, each row of the index value matrix DW can be used to evaluate the similarity of a text, and each column can be used to evaluate the similarity of a word.

The classification model generation unit 14 generates a classification model for classifying m texts di into a plurality of phenomena based on a text index value group including n similarity index values $dw_j$ (j = 1, 2, ..., n) per one text $d_i$ (i = 1, 2, ..., m) using $m \times n$ similarity index values computed by the index value computation unit 13. For example, in the case of generating a classification model for classification into three first to third phenomena, the classification model generation unit 14 generates a classification model in which classification into the "first phenomenon" is performed for a text index value group computed based on a text known to correspond to the first phenomenon, classification into the "second phenomenon" is performed for a text index value group computed based on a text known to correspond to the second phenomenon, and classification into the "third phenomenon" is performed for a text index value group computed based on a text known to correspond to the third phenomenon. Then, the classification model generation unit 14 causes the classification model storage unit 30 to store the generated classification model.

Here, for example, in the case of a first text $d_i$, n similarity index values $dw_{11}$ to $dw_{1n}$ included in a first row of the index value matrix DW correspond to a text index value group. Similarly, in the case of a second text $d_2$, n similarity index values $dw_{21}$ to $dw_{2n}$ included in a second row of the index value matrix DW correspond to a text index value group. Hereinafter, this description is similarly applied to text index value groups up to a text index value group (n similarity index values $dw_{m1}$ to $dw_{mn}$) related to an mth text $d_m$.

For example, the classification model generation unit 14 generates a classification model for classifying each text $d_i$ into a plurality of phenomena by computing each feature quantity for a text index value group of each text di, and optimizing separation of a plurality of groups by the Markov chain Monte Carlo method according to a value of the computed feature quantity. Here, the classification model generated by the classification model generation unit 14 is a learning model that uses a text index value group as an input and outputs one of a plurality of phenomena desired to be predicted as a solution. Alternatively, it is possible to adopt a learning model that outputs, as a probability, a possibility of corresponding to each of the plurality of phenomena desired to be predicted. A form of the learning model is arbitrary.

For example, a form of the classification model generated by the classification model generation unit 14 may be set to any one of a regression model (learning model based on linear regression, logistic regression, support vector machine, etc.), a tree model (learning model based on decision tree, regression tree, random forest, gradient boosting tree, etc.), a neural network model (learning model based on perceptron, convolutional neural network, recurrent neural network, residual network, RBF network, stochastic neural network, spiking neural network, complex neural network, etc.), a Bayesian model (learning model based on Bayesian inference), a clustering model (learning model based on k-nearest neighbor method, hierarchical clustering, non-hierarchical clustering, topic model, etc.), etc. Note that the classification models listed here are merely examples, and the invention is not limited thereto.

The prediction data input unit 20 inputs text data related to one or more texts to be predicted as prediction data. The text data input by the prediction data input unit 20 is text data related to a text that is unknown in terms of which one of the plurality of phenomena a phenomenon to which the text corresponds is. The text data input by the prediction data input unit 20 may be data in which a text related to the plurality of phenomena desired to be predicted is described similarly to the text data input by the learning data input unit 10, or data in which a text considered to be unrelated to the plurality of phenomena desired to be predicted is described.

The number of pieces of text data (number of texts) m' input by the prediction data input unit 20 may not be the same as the number (m) of texts input by the learning data input unit 10. One or a plurality of pieces of text data may be input by the prediction data input unit 20. However, a similarity index value is also computed for a text input by the prediction data input unit 20. Since a similarity index value represents which word contributes to which text and to what extent, or which text contributes to which word and to what extent, it is preferable that a plurality of texts is input by the prediction data input unit 20.

The phenomenon prediction unit 21 predicts one of a plurality of phenomena from prediction target data by applying a similarity index value obtained by executing processing of the word extraction unit 11, the vector computation unit 12 and the index value computation unit 13 of the similarity index value computation unit 100 for prediction data input by the prediction data input unit 20 to a classification model generated by the classification model generation unit 14 (classification model stored in the classification model storage unit 30).

For example, when m' pieces of text data are input as prediction data by the prediction data input unit 20, m' text index value groups are obtained by the phenomenon prediction unit 21 executing processing of the similarity index value computation unit 100 for the m' pieces of text data. The phenomenon prediction unit 21 applies the m' text index value groups computed by the similarity index value computation unit 100 to the classification model as input data one by one, thereby predicting one of the plurality of phenomena to which each of the m' texts corresponds.

Here, it is preferable that the word extraction unit 11 extracts the same words as n words extracted from m pieces of learning data from prediction data. A reason is that since a text index value group including n words extracted from prediction data has the same words as those of a text index value group including n words extracted from learning data as elements, conformity to a classification model stored in the classification model storage unit 30 increases. However, it is not necessary to extract, at the time of prediction, the same n words as those at the time of learning since in a case where a text index value group for prediction is generated by a combination of words different from those at the time of learning, even though conformity to the classification model decreases, it is possible to predict a possibility of corresponding to a phenomenon using the fact that conformity is low as an element of evaluation.

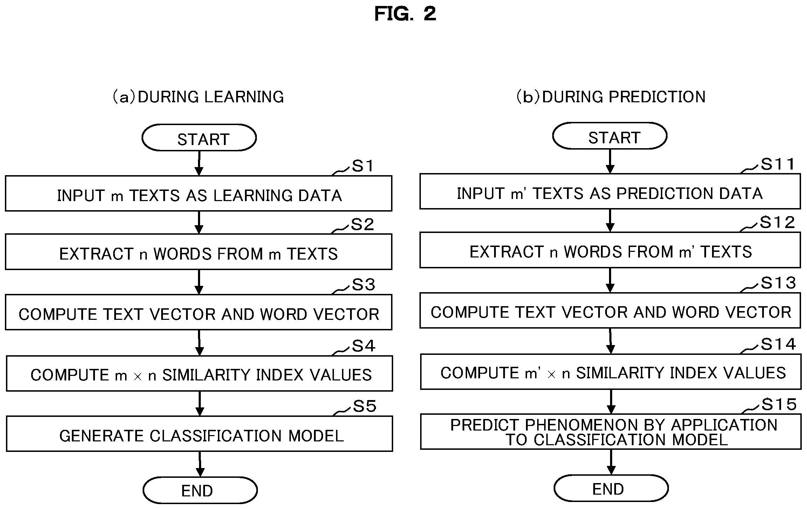

Fig. 2 is a flowchart illustrating an operation example of the phenomenon prediction device according to the present embodiment configured as described above. Fig. 2(a) illustrates an operation example during learning for generating a classification model, and Fig. 2(b) illustrates an operation example during prediction for predicting a phenomenon using the generated classification model.

During learning illustrated in Fig. 2(a), first, the learning data input unit 10 inputs text data related to m texts as learning data (step S1). Here, which one of a plurality of phenomena is a phenomenon to which each of the m texts corresponds is known. The word extraction unit 11 analyzes the m texts input by the learning data input unit 10, and extracts n words from the m texts (step S2).

Subsequently, the vector computation unit 12 computes m text vectors $d_i\rightarrow$ and n word vectors $w_j\rightarrow$ from the m texts input by the learning data input unit 10 and the n words extracted by the word extraction unit 11 (step S3). Then, the index value computation unit 13 obtains each of the inner products of the m text vectors $d_i\rightarrow$ and the n word vectors $w_j\rightarrow$, thereby computing m × n similarity index values (index value matrix DW having m × n similarity index values as respective elements) reflecting a relationship between the m texts di and the n words $w_j$ (step S4).

Further, the classification model generation unit 14 generates a classification model for classifying the m texts di into a plurality of phenomena based on a text index value group including n similarity index values $dw_j$ per one text di using the m × n similarity index values computed by the index value computation unit 13, and causes the classification model storage unit 30 to store the generated classification model (step S5). In this way, the operation during learning ends.

During prediction illustrated in Fig. 2(b), first, the prediction data input unit 20 inputs text data related to one or more texts as prediction data (step S11). Here, which one of a plurality of phenomena is a phenomenon to which the text corresponds is unknown. The phenomenon prediction unit 21 supplies the prediction data input by the prediction data input unit 20 to the similarity index value computation unit 100, and gives an instruction to compute a similarity index value.

According to this instruction, the word extraction unit 11 analyzes the m' texts input by the prediction data input unit 20, and extracts n words from the m' texts (the same words as those extracted from the learning data) (step S12). Note that not all the n words may be included in the m' texts. A null value is given for a word not existing in the m' texts.

Subsequently, the vector computation unit 12 computes m' text vectors $d_i\rightarrow$ and n word vectors $w_j\rightarrow$ from the m' texts input by the prediction data input unit 20 and the n words extracted by the word extraction unit 11 (step S13).

Then, the index value computation unit 13 obtains each of the inner products of the m' text vectors $d_i\rightarrow$ and the n word vectors $w_j\rightarrow$, thereby computing m' × n similarity index values (index value matrix DW having m' × n similarity index values as respective elements) reflecting a relationship between the m' texts di and the n words $w_j$ (step S14). The index value computation unit 13 supplies the computed m' × n similarity index values to the phenomenon prediction unit 21.

The phenomenon prediction unit 21 predicts one of a plurality of phenomena to which each of the m' texts corresponds by applying each of m' text index value groups to a classification model stored in the classification model storage unit 30 based on the m' × n similarity index values supplied from the similarity index value computation unit 100 (step S15). In this way, the operation during prediction ends.

As described in detail above, in the present embodiment, the inner product of a text vector computed from a text and a word vector computed from a word included in the text is calculated to compute a similarity index value reflecting a relationship between the text and the word, and a classification model is generated using this similarity index value. Thus, a classification model is generated using the similarity index value representing which word contributes to which text and to what extent, or which text contributes to which word and to what extent. For this reason, it is possible to classify a text into one of a plurality of phenomena, taking into account a level of contribution of m texts and n words. Therefore, according to the present embodiment, in the case of predicting a phenomenon by machine learning using a text as a target, it is possible to increase accuracy of a classification model generated by learning to improve accuracy of predicting a phenomenon from a text.

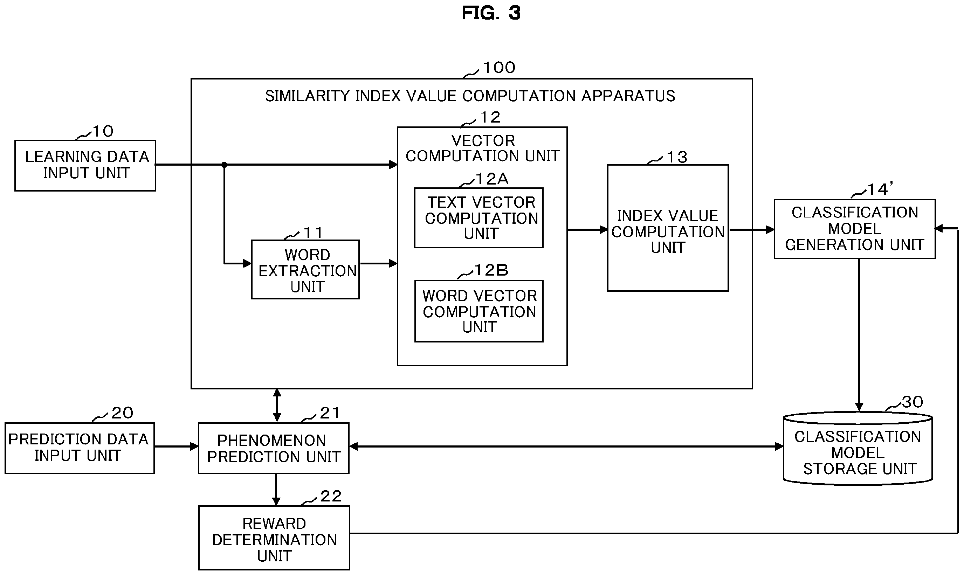

Note that in the present embodiment, a description has been given of an example of applying supervised learning that uses text data related to a text that is known in terms of which one of a plurality of phenomena a phenomenon to which the text corresponds is, as learning data. Above supervised learning may be combined with reinforcement learning. Fig 3 is a block diagram illustrating a functional configuration example of a phenomenon prediction device according to another embodiment in which a mechanism for reinforcement learning is added.

As illustrated in Fig. 3, the phenomenon prediction device according to another embodiment further includes a reward determination unit 22 in addition to the configuration illustrated in Fig. 1. In addition, the phenomenon prediction device according to another embodiment includes a classification model generation unit 14' instead of the classification model generation unit 14 illustrated in Fig. 1.

The reward determination unit 22 determines a reward given to the classification model generation unit 14' according to an actual phenomenon with respect to a phenomenon predicted by the phenomenon prediction unit 21. For example, the reward determination unit 22 determines to give a positive reward when the phenomenon predicted by the phenomenon prediction unit 21 matches the actual phenomenon, and determines to give no reward or a negative reward when the predicted phenomenon does not match the actual phenomenon. Whether the predicted phenomenon matches the actual phenomenon can be determined by various methods.

For example, in the case of predicting hobbies and preferences of a user as a plurality of phenomena, when information matching a predicted hobby and preference is presented to the user, and the user takes an action on the information, it is possible to determine that the predicted phenomenon matches the actual phenomenon. As a specific example, when advertisement information of a product or service matching a predicted hobby and preference is displayed on a web page viewed by the user, and the user takes an action such as clicking the advertisement information to browse detailed information or purchasing the product or service listed in the advertisement information, it is determined that a predicted phenomenon matches an actual phenomenon.

In addition, in the case of predicting a possibility of a specific failure occurring in a certain system, whether or not the specific failure actually occurs is monitored based on history data recording a monitoring history of the system, and when it is detected from the history data that a predicted failure actually occurs, it is possible to determine that the predicted phenomenon matches the actual phenomenon. Similarly, in the case of predicting a possibility of a specific symptom occurring for a plurality of users, whether or not the specific symptom actually occurs is monitored based on history data such as a medical examination history of the users, and when it is detected from the history data that a predicted symptom actually occurs, it is possible to determine that a predicted phenomenon matches an actual phenomenon.

Similarly to the classification model generation unit 14 illustrated in Fig. 1, the classification model generation unit 14' generates a classification model based on learning data input by the learning data input unit 10, and causes the classification model storage unit 30 to store the generated classification model. In addition, the classification model generation unit 14' modifies the classification model stored in the classification model storage unit 30 according to a reward determined by the reward determination unit 22. As described above, by adding a mechanism of reinforcement learning to a mechanism of supervised learning to generate the classification model, it is possible to further improve the accuracy of the classification model.

In addition, the embodiment is merely an example of a specific embodiment for carrying out the invention, and the technical scope of the invention should not be interpreted in a limited manner. That is, the invention can be implemented in various forms without departing from the gist or the main features thereof.

Reference Signs List

| 10 | Learning data input unit |
|---|---|
| 11 | Word extraction unit |
| 12 | Vector computation unit |
| 12A | Text vector computation unit |
| 12B | Word vector computation unit |
| 13 | Index value computation unit |
| 14, 14' | Classification model generation unit |
| 20 | Prediction data input unit |
| 21 | Phenomenon prediction unit |
| 22 | Reward determination unit |
| 30 | Classification model storage unit |
| 100 | Similarity index value computation unit |

**Claims**

1. A phenomenon prediction device **characterized by** comprising:

a word extraction unit that analyzes m (m is an arbitrary integer of 2 or more) texts and extracts n (n is an arbitrary integer of 2 or more) words from the m texts;
a text vector computation unit that converts each of the m texts into a q-dimension vector (q is an arbitrary integer of 2 or more) according to a predetermined rule, thereby computing m text vectors including q axis components;
a word vector computation unit that converts each of the n words into a q-dimension vector according to a predetermined rule, thereby computing n word vectors including q axis components;
an index value computation unit that takes each of inner products of the m text vectors and the n word vectors, thereby computing $m \times n$ similarity index values reflecting a relationship between the m texts and the n words;
a classification model generation unit that uses the $m \times n$ similarity index values computed by the index value computation unit to generate a classification model for classifying the m texts into a plurality of phenomena based on a text index value group including n similarity index values per one text;
a prediction data input unit that inputs one or more texts to be predicted as prediction data; and
a phenomenon prediction unit that predicts one of a plurality of phenomena from the prediction data to be predicted by applying a similarity index value obtained by executing processing of the word extraction unit, the text vector computation unit, the word vector computation unit and the index value computation unit for the prediction data input by the prediction data input unit to the classification model generated by the classification model generation unit.

2. The phenomenon prediction device according to claim 1, **characterized in that** the text vector computation unit and the word vector computation unit set, to a target variable, a value obtained by computing and adding a probability that one of the m texts is expected from one of the n words, or a probability that one of the n words is expected from one of the m texts for all combinations of the m texts and the n words, and compute a text vector and a word vector for maximizing the target variable.

3. The phenomenon prediction device according to claim 1 or 2, **characterized in that** the index value computation unit calculates a product of a text matrix having the respective q axis components of the m text vectors as respective elements and a word matrix having the respective q axis components of the n word vectors as respective elements, thereby computing an index value matrix having the $m \times n$ similarity index values as respective elements.

4. The phenomenon prediction device according to any one of claims 1 to 3, further comprising
a learning data input unit that inputs the m texts as learning data, which one of the plurality of phenomena is a phenomenon to which each of the m texts corresponds being known,

wherein processing of the word extraction unit, the text vector computation unit, the word vector computation unit, the index value computation unit, and the classification model generation unit is executed for the m texts input as the learning data by the learning data input unit.

5. The phenomenon prediction device according to any one of claims 1 to 4, further comprising
a reward determination unit that determines a reward given to the classification model generation unit according to an actual phenomenon with respect to a phenomenon predicted by the phenomenon prediction unit,
wherein the classification model generation unit modifies the classification model according to a reward determined by the reward determination unit.

6. A prediction model generation device **characterized by** comprising:

a word extraction unit that analyzes m (m is an arbitrary integer of 2 or more) texts and extracts n (n is an arbitrary integer of 2 or more) words from the m texts;
a text vector computation unit that converts each of the m texts into a q-dimension vector (q is an arbitrary integer of 2 or more) according to a predetermined rule, thereby computing m text vectors including q axis components;
a word vector computation unit that converts each of the n words into a q-dimension vector according to a predetermined rule, thereby computing n word vectors including q axis components;
an index value computation unit that takes each of inner products of the m text vectors and the n word vectors, thereby computing $m \times n$ similarity index values reflecting a relationship between the m texts and the n words; and
a classification model generation unit that uses the $m \times n$ similarity index values computed by the index value computation unit to generate a classification model for classifying the m texts into a plurality of phenomena as a prediction model for predicting phenomena from the texts based on a text index value group including n similarity index values per one text.

7. The prediction model generation device according to claim 6, **characterized in that** the text vector computation unit and the word vector computation unit compute a probability that one of the m texts is predicted from one of the n words or a probability that one of the n words is predicted from one of the m texts for all combinations of the m texts and the n words, set a total value thereof as a target variable, and compute a text vector and a word vector maximizing the target variable.

8. The prediction model generation device according to claim 6 or 7, **characterized in that** the index value computation unit calculates a product of a text matrix having the respective q axis components of the m text vectors as respective elements and a word matrix having the respective q axis components of the n word vectors as respective elements, thereby computing an index value matrix having the $m \times n$ similarity index values as respective elements.

9. A phenomenon prediction program causing a computer to function as:

a word extraction unit means that analyzes m (m is an arbitrary integer of 2 or more) texts and extracts n (n is an arbitrary integer of 2 or more) words from the m texts;
a vector computation means that converts each of the m texts into a q-dimension vector (q is an arbitrary integer of 2 or more) according to a predetermined rule and converts each of the n words into a q-dimension vector according to a predetermined rule, thereby computing m text vectors including q axis components and n word vectors including q axis components;
an index value computation means that takes each of inner products of the m text vectors and the n word vectors, thereby computing $m \times n$ similarity index values reflecting a relationship between the m texts and the n words; and
classification model generation means that uses the $m \times n$ similarity index values computed by the index value computation means to generate a classification model for classifying the m texts into a plurality of phenomena as a prediction model for predicting phenomena from the texts based on a text index value group including n similarity index values per one text.

10. The phenomenon prediction program according to claim 9, further causing a computer to function as:

a prediction data input means that inputs one or more texts or one or more words to be predicted as prediction data; and
a phenomenon prediction means that predicts one of a plurality of phenomena from the prediction data to be predicted by applying a similarity index value obtained by executing processing of the word extraction means, the text vector computation means, the word vector computation means and the index value computation means for the prediction data input by the prediction data input means to the classification model generated by the classification model generation means.

**FIG. 1**

SIMILARITY INDEX VALUE COMPUTATION APPARATUS — 100

LEARNING DATA INPUT UNIT — 10

WORD EXTRACTION UNIT — 11

VECTOR COMPUTATION UNIT — 12

TEXT VECTOR COMPUTATION UNIT — 12A

WORD VECTOR COMPUTATION UNIT — 12B

INDEX VALUE COMPUTATION UNIT — 13

CLASSIFICATION MODEL GENERATION UNIT — 14

PREDICTION DATA INPUT UNIT — 20

PHENOMENON PREDICTION UNIT — 21

CLASSIFICATION MODEL STORAGE UNIT — 30

EP 3 779 728 A1

# FIG. 2

(a) DURING LEARNING

```
         START
           │
           ▼                    ╭─S1
┌──────────────────────────────────┐
│  INPUT m TEXTS AS LEARNING DATA   │
└──────────────────────────────────┘
           │
           ▼                    ╭─S2
┌──────────────────────────────────┐
│    EXTRACT n WORDS FROM m TEXTS   │
└──────────────────────────────────┘
           │
           ▼                    ╭─S3
┌──────────────────────────────────┐
│ COMPUTE TEXT VECTOR AND WORD VECTOR│
└──────────────────────────────────┘
           │
           ▼                    ╭─S4
┌──────────────────────────────────┐
│ COMPUTE m × n SIMILARITY INDEX VALUES│
└──────────────────────────────────┘
           │
           ▼                    ╭─S5
┌──────────────────────────────────┐
│   GENERATE CLASSIFICATION MODEL   │
└──────────────────────────────────┘
           │
           ▼
          END
```

(b) DURING PREDICTION

```
         START
           │
           ▼                    ╭─S11
┌──────────────────────────────────┐
│  INPUT m' TEXTS AS PREDICTION DATA │
└──────────────────────────────────┘
           │
           ▼                    ╭─S12
┌──────────────────────────────────┐
│   EXTRACT n WORDS FROM m' TEXTS   │
└──────────────────────────────────┘
           │
           ▼                    ╭─S13
┌──────────────────────────────────┐
│ COMPUTE TEXT VECTOR AND WORD VECTOR│
└──────────────────────────────────┘
           │
           ▼                    ╭─S14
┌──────────────────────────────────┐
│ COMPUTE m' × n SIMILARITY INDEX VALUES│
└──────────────────────────────────┘
           │
           ▼                    ╭─S15
┌──────────────────────────────────┐
│  PREDICT PHENOMENON BY APPLICATION │
│      TO CLASSIFICATION MODEL       │
└──────────────────────────────────┘
           │
           ▼
          END
```

EP 3 779 728 A1

## FIG. 3

SIMILARITY INDEX VALUE COMPUTATION APPARATUS — 100

LEARNING DATA INPUT UNIT — 10

VECTOR COMPUTATION UNIT — 12

TEXT VECTOR COMPUTATION UNIT — 12A

WORD VECTOR COMPUTATION UNIT — 12B

WORD EXTRACTION UNIT — 11

INDEX VALUE COMPUTATION UNIT — 13

CLASSIFICATION MODEL GENERATION UNIT — 14'

PREDICTION DATA INPUT UNIT — 20

PHENOMENON PREDICTION UNIT — 21

REWARD DETERMINATION UNIT — 22

CLASSIFICATION MODEL STORAGE UNIT — 30

EP 3 779 728 A1

## INTERNATIONAL SEARCH REPORT

International application No.

PCT/JP2019/017193

### A. CLASSIFICATION OF SUBJECT MATTER
Int.Cl. G06F16/35(2019.01)i
According to International Patent Classification (IPC) or to both national classification and IPC

### B. FIELDS SEARCHED

Minimum documentation searched (classification system followed by classification symbols)
Int.Cl. G06F16/35

Documentation searched other than minimum documentation to the extent that such documents are included in the fields searched
Published examined utility model applications of Japan       1922-1996
Published unexamined utility model applications of Japan      1971-2019
Registered utility model specifications of Japan          1996-2019
Published registered utility model applications of Japan      1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2005-208782 A (FUJI XEROX CO., LTD.) 04 August 2005, paragraphs [0070]-[0073], [0099]-[0109] (Family: none) | 1-10 |
| A | WO 2017/199445 A1 (FRONTEO HEALTHCARE, INC.) 23 November 2017, paragraphs [0022]-[0032] (Family: none) | 1-10 |
| A | JP 2018-32213 A (SHARP CORP.) 01 March 2018, paragraphs [0033], [0035], [0041]-[0045] (Family: none) | 1-10 |

☐ Further documents are listed in the continuation of Box C.    ☐ See patent family annex.

| | |
|---|---|
| *  Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>01 July 2019 (01.07.2019) | Date of mailing of the international search report<br>09 July 2019 (09.07.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002149675 A

- JP 2004287776 A

**Non-patent literature cited in the description**

- Distributed Representations of Sentences and Documents. **QUOC LE ; TOMAS MIKOLOV.** Proceedings of the 31st International Conference on Machine Learning Held in Bejing. Google Inc, 22 June 2014